# EUROPEAN PATENT SPECIFICATION

(11) **EP 3 732 247 B1**
(45) Date of publication and mention of the grant of the patent: **28.09.2022**
(21) Application number: 17936835.2
(22) Date of filing: 28.12.2017
(51) Int. Cl.: C08L 69/00, C08L 55/00, C08L 33/06, C08K 3/34

(54) **A POLYCARBONATE COMPOSITION AND A MOLDED ARTICLE PREPARED FROM THE SAME**
POLYCARBONATZUSAMMENSETZUNG UND DARAUS HERGESTELLTER FORMKÖRPER
COMPOSITION DE POLYCARBONATE ET ARTICLE MOULÉ PRÉPARÉ À PARTIR DE CELLE-CI

(43) Date of publication of application: 04.11.2020
(73) Proprietor: Covestro Deutschland AG, 51373 Leverkusen (DE)
(72) Inventor: GUO, Qing, Shanghai 200233 (CN); REN, Yu, Shanghai 200129 (CN)
(74) Representative: Levpat
(86) International application number: PCT/CN2017/119225
(87) International publication number: WO 2019/127177

(56) References cited:
- CN-A- 101 875 771
- CN-A- 101 875 771
- CN-A- 102 770 483
- CN-A- 102 770 483
- CN-A- 102 791 787
- CN-A- 102 791 787
- US-A- 5 367 016
- US-A- 5 367 016
- US-A1- 2006 270 768

## Description

### Technical Field

The present invention provides a polycarbonate composition comprising a polycarbonate, an impact-resistant modifier, a functional acrylic polymer, a flame retardant and kaolin. In another aspect, the present invention relates to a molded article prepared from said polycarbonate composition, wherein said article possesses a good apparent property and a good impact-resistant property.

### Background Technology

Flame-retardant and impact-resistant modified polycarbonate resins are widely used in IT products due to their excellent mechanical properties (such as impact strength, heat resistance, etc.) and flame resistance. However, when these resins are used in thin-walled IT products, the surfaces of these products would usually have stress marks or flow marks on the sprue or the article, and therefore requiring additional treatment on the surfaces to eliminate these imperfections.

U.S. Patent No. 7625964 discloses a polycarbonate composition having good flame resistance, heat resistance and mechanical properties. Said composition comprises a functional acrylic polymer and a core-shell type impact-resistant modifier, and said patent further discloses that adding clay in said formulation will reduce the impact strength of the article, and said patent does not disclose how to obtain an article having a good apparent property.

Thus, there is still a need in the art to a polycarbonate composition that can be used to prepare an article possessing both a good apparent property and impact strength.

### Summary of the Invention

In one aspect, the present invention provides a polycarbonate composition, comprising:
A) a polycarbonate, wherein said polycarbonate is selected from aromatic polycarbonate, polyester polycarbonate or combinations thereof, and the content of polycarbonate is 40-95wt.%, preferably 50-90wt%, more preferably 55-85wt.% based on the total weight of said polycarbonate composition as 100 wt.%;
B) an impact-resistant modifier with core-shell structure, wherein the content of said impact modifier with core-shell structure is 1-15 wt.%, preferably 1-10wt.%, more preferably 1-8wt.%, based on the total weight of said polycarbonate composition as 100 wt.%;
C) a functional acrylic polymer containing three moieties E/X/Y, wherein E is ethylene, X is an α,β-ethylenically unsaturated monomer derived from at least one of the substances selected from the group consisting of alkyl acrylate, alkyl methacrylate, alkyl vinyl ether, , and Y is an a,p-ethylenically unsaturated monomer containing a reactive group, , and the content of said functional acrylic polymer is 1-15. %, preferably 1-10wt.%, more preferably 1-8wt.% based on the total weight of said polycarbonate composition as 100 wt. %;
D) 1-20 wt.-%, preferably 5-20 wt.-%, more preferably 8-18 wt.-% of at least one phosphorous based flame retardant;
E) 0.1-15 wt.-%, preferably 0.5-10 wt.-%, more preferably 1-5 wt.-% kaolin with an average particle size of 0.1-100µm, preferably 0.1-50µm, more prerferably 0.1-25µm
   wherein, the total amount of compound B and compound C is 2-25wt.%, preferably 2-15wt.%, more preferably 4-15wt.%, based on the total weight of said polycarbonate composition as 100 wt. %.
Preferably said functional acrylic polymer is selected from random terpolymer of ethylene, acrylate and glycidyl methacrylate.

Another aspect of the present invention relates to a polycarbonate molded article prepared from the polycarbonate composition, wherein the notched impact strength of said molded article is at least 20KJ/m², as determined according to ISO180/A: 2000, the flame resistance reaches V0 at the thicknesses of 1.0mm and 0.75mm, as determined according to UL94:2006, and the vicat softening temperature is at least 90°C, as determined according to ISO306:2013.

In some embodiments of the present invention, said molded article is the shell of electronic or electrical product, preferably the shell of mobile phone, laptop, projector, copier, printer, or monitor equipment.

The polycarbonate article provided by the present invention possesses a good impact-resistant property and apparent property. After the addition of kaolin, into the polycarbonate composition, there is not a significant change in the impact-resistant property of the article prepared therefrom, and the apparent is further improved.

### Detailed Description

### Component A

For the purpose of the present invention, thermoplastic aromatic polycarbonates are not only homopolycarbonates but also copolycarbonates; as is already known, these polycarbonates may be linear or branched polycarbonates, polyester-carbonate copolymers and siloxane-carbonate copolymers. Said thermoplastic aromatic polycarbonates have a weight average molecular weight from 10,000 to 200,000 g/mol, preferably from 15,000 to 80,000 g/mol, particularly preferably from 18,000 to 32,000 g/mol (Mw, measured by for example GPC in methylene chloride with polycarbonate as standard, ultracentrifugation or scattered light).

A part, at most 80 mol.%, preferably from 20 mol.% to 50 mol.%, of the carbonate group in the suitable polycarbonates according to the present invention may be replaced by aromatic dicarboxylic acid ester groups. These polycarbonates, with not only the acid moieties from carbonic acids, but also the acid moieties from aromatic dicarboxylic acids being introduced into their molecular chain, are referred to as aromatic polyester carbonates. For the sake of simplicity, the present application includes them into an umbrella term of "thermoplastic aromatic polycarbonates".

Said polycarbonates are produced in a known manner from diphenols, carbonic acid derivatives and optional chain termination agents and optional branching agents. Moreover, the production of polyester carbonates herein relates to the use of aromatic dicarboxylic acids or dicarboxylic acid derivatives to replace a portion of the carbonic acid derivatives, and in particular, according to the extent of the intended replacement of the carbonate structural units in the aromatic polycarbonates by aromatic dicarboxylic ester structural units.

The polycarbonates in the present application are added into the composition in an amount of from 40 to 95 wt.%, preferably from 50 to 90 wt.%, and most preferably from 55 to 85 wt.%, based on the total weight of the composition.

The dihydroxyaryl compounds suitable for the production of polycarbonates are those of formula (I):

HO-Z-OH (I),

wherein Z is an aromatic group having from 6 to 30 carbon atoms; said group may contain one or more aromatic rings, and may be substituted, and may contain an aliphatic or cycloaliphatic group and/or alkylaryl or a heteroatom as a bridging member.

Z in formula (I) is preferably a group of formula (II) 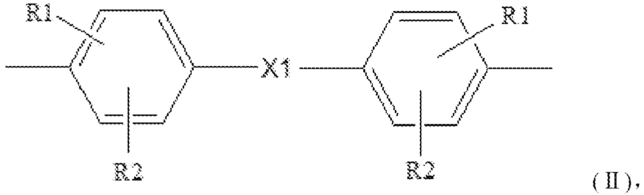 wherein
R1 and R2 are each independently H, C1- to C18-alkyl, C1- to C18-alkoxy, halogen such as C1 or Br, or aryl or aralkyl, each of which is optionally substituted; and preferably H or C1 to C12 alkyl, more preferably H or C1- to C8-alkyl, and most preferably H or methyl, and
X1 is a single bond, -SO₂-, -CO-, -O-, -S-, C1- to C6-alkylene, C2- to C5-alkylidene or C5- to C6 cycloalkylidene, which may be substituted with C1- to C6-alkyl, preferably methyl or ethyl; or may also be C6- to C12-arylene, which may optionally be fused with an aromatic ring containing other heteroatoms.

X1 is preferably a single bond, C1- to C5-alkylene, C2- to C5-alkylidene, C5- to C6-cycloalkylidene, -O-, -SO-, -CO-, -S-, -SO₂-, or a group of formula (IIIa) or (IIIb) 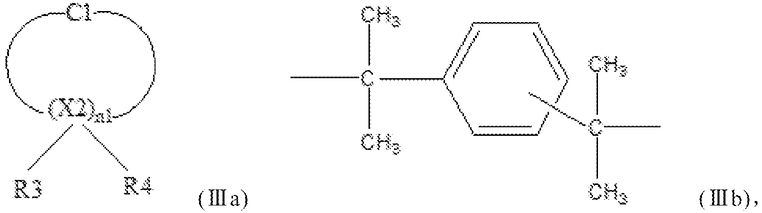 wherein
R3 and R4 may be independently selected for each X2 and are each independently hydrogen or C1- to C6 alkyl, preferably hydrogen, methyl or ethyl, and
X2 is carbon, and
n1 is an integer of 4 to 7, preferably 4 or 5,
wherein the proviso is that R3 and R4 are both alkyl groups on at least one atom X2.

Examples of diphenols suitable for the production of polycarbonates used in the present invention include hydroquinone, resorcinol, dihydroxybiphenyl, bis(hydroxyphenyl)alkanes, bis(hydroxyphenyl)cycloalkanes, bis(hydroxyphenyl)sulfide, bis(hydroxyphenyl)ether, bis(hydroxyphenyl)ketone, bis(hydroxyphenyl)sulfone, bis(hydroxyphenyl)sulfoxide, '-bis(hydroxyphenyl)diisopropylbenzene and the alkylated, cyclic-alkylated and ring-halogenated compounds thereof.

The preferred diphenols are 4,4'-dihydroxybiphenyl, 2,2-bis(4-hydroxyphenyl)-1-phenyl-propane, 1,1-bis(4-hydroxyphenyl)phenylethane, 2,2-bis(4-hydroxypheny))propane, 2,4-bis(4-hydroxyphenyl)-2-methylbutane, 1.3-bis[2-(4-hydroxyphenyl)2-propyl]benzene(bisphenol M), 2,2-bis(3-methy)-4-hydroxyphenyl)propane, bis(3,5-dimethyl-4-hydroxyphenyl)methane, 2,2-bis(3,5-dimethyl-4-hydroxyphenyl)propane, bis(3,5-dimethyl-4-hydroxyphenyl)sulfone, 2.4-bis(3,5-dimethyl-4-hydroxyphenyl)-2-methylbutane, 1,3-bis[2-(3,5-dimethyl-4-hydroxyphenyl)-2-propyl]benzene and 1,1-bis(4-liydroxyptienyl)-'),3,5-triniethylcyclohexane(bisplieiiol TMC).

The particularly preferred diphenols are 4,4'-dihydroxybiphenyl, 1,1-bis(4-hydroxyphenyl)phenylethane, 2,2-bis(4-hydroxyphenyl) propane, 2,2-bis(3,5-dimethyl-4-hydroxyphenyl)propane, 1,1-bis(4-hydroxyphenyl)cyclohexane and 1,1-bis(4-hydroxyphenyl)-3,3,5-trimethylcyclohexane(bisphenol TMC).

In cases of homopolycarbonates, only one type of diphenol is used; in cases of copolycarbonates, two or more diphenols are used. The diphenols used and all of other adjuvants and chemicals added into the synthesis may be contaminated by impurities from their own synthesis, treatment and storage. However, it is desirable to operate with very pure raw materials.

As a monofunctional chain termination agent required for the regulation of the molecular weight, phenol or alkylphenol, especially phenol, p-tert-butylphenol, isooctylphenol, cumylphenol, chlorocarbonate(s) thereof, or acyl chloride of monocarboxylic acid and/or mixtures of these chain termination agents are useful.

The branching agent or branching agent mixture is selected from the group consisting of acyl chlorides of triphenols, tetraphenols or tricarboxylic acids or tetracarboxylic acids, or other mixtures of polyphenols or acyl chlorides.

Examples of aromatic dicarboxylic acids suitable for the production of polyester carbonates include phthalic acid, terephthalic acid, isophthalic acid, tert-butylisophthalic acid, 3,3'-biphenyldicarboxylic acid, 4, 4'-biphenyldicarboxylic acid, 4,4-benzophenone dicarboxylic acid, 3,4'-benzophenone dicarboxylic acid, 4,4'-diphenyl ether dicarboxylic acid, 4,4'-diphenylsulfone dicarboxylic acid, 2,2-bis (4-carboxyphenyl) propane and trimethyl-3-phenylindan-4,5'-dicarboxylic acid. Among these aromatic dicarboxylic acids, the use of terephthalic acid and/or isophthalic acid are particularly preferred.

Said dicarboxylic acid derivatives are diacyl halides of dicarboxylic acid and dialkyl dicarboxylates, in particular diacid chloride of dicarboxylic acid and dimethyl dicarboxylate.

The carbonate groups are substantially stoichiometrically and quantitatively replaced by aromatic dicarboxylic acid ester groups, thus the molar ratio of these reactants is also obtained in the finished polyester carbonates. The introduction of aromatic dicarboxylic acid ester groups may take place randomly or in the form of blocks.

The preferred methods for the production of the polycarbonates according to the present invention, including polyester carbonates, are the interfacial process and the melting transesterification process that are already known (see, for example, WO 2004/063249 A1, WO 2001/05866 A1, WO 2000/105867, US 5,340,905 A, US 5,097,002 A, US-A 5,717,057 A). In the first case, the acid derivatives are preferably phosgene and optionally diacid chloride of dicarboxylic acid ; in the later case, they are preferably diphenyl carbonate and optionally a diester of dicarboxylic acid. The catalysts, solvents, postprocessing, reaction conditions and the like for the production of polycarbonates and for the production of polyester carbonic acids have been extensively described and are well known in both cases.

Polycarbonates and polyester carbonates can be post-processed in a known manner, and can be processed into a molded article of any required type by, for example, extrusion or injection molding.

### B) Impact-resistant modifier with core-shell structure

Component B is an impact-resistant modifier with core-shell structure.

The average particle size (d₅₀ value) of the impact-resistant modifier with core-shell structure that can be used in the present invention is from 0.01 to 10 µm, preferably from 0.05 to 2 µm, and most preferably from 0.1 to 1 µm; and the average particle diameter is measured by Malvern laser diffraction method.

The impact-resistant modifier with core-shell structure may be selected from the rubber-modified graft polymer B.1.

The rubber-modified graft polymer B.1 used as component B comprises B.1.1 grafted onto B.1.2, wherein

B.1.1: 5-95 wt.%, preferably 15-92 wt.%, in particular 25-60 wt.% of at least one vinyl monomer, based on component B.1,

B.1.2: 95-5 wt.%, preferably 85-8 wt.%, in particular 75-40 wt.% of one or more rubber grafting bases, based on component B.1, which preferably has a glass transition temperature of < 10 °C, more preferably < 0 °C, and particularly preferably < -20 °C.

The glass transition temperature is determined by the Dynamic Scanning Calorimeter (DSC) at a heating rate of 10 K/min according to the DINEN61006 standard, where Tg is defined as the intermediate-point temperature (tangent method).

The grafting base B.1.2 has an average particle size (d₅₀ value) of usually from 0.05 to 10 µm, preferably from 0.1 to 5 µm, and more preferably from 0.2 to 1 µm.

The average particle size d₅₀ is the diameter wherein there are respectively 50 wt.% of particles with the diameter above and below this diameter. It can be determined by ultracentrifugation (W.Scholtan, H. Lange, Kolloid, Z. und Z. Polymere 250 (1972), 782-1796).

Monomer B.1.1 is preferably a mixture of B.1.1.1 and B.1.1.2:
B.1.1.1: based on B.1.1, 50 to 99 parts by weight, preferably 60 to 80 parts by weight, particularly 70 to 80 parts by weight of vinyl aromatic compounds, and/or vinyl aromatic compounds substituted on the ring (e.g., styrene, α-methylstyrene, p-methylstyrene, p-chlorostyrene) and/or (C1-C8)-alkyl methacrylate, such as methyl methacrylate, ethyl methacrylate, and
B.1.1.2: based on B.1.1, 1 to 50 parts by weight, preferably 20 to 40 parts by weight, particularly 20 to 30 parts by weight of vinyl cyanides (unsaturated nitriles such as acrylonitrile and methacrylonitrile), and/or (C1-C8)-alkyl (meth)acrylate such as methyl methacrylate, n-butyl acrylate, t-butyl acrylate, and/or derivatives of unsaturated carboxylic acids (such as anhydrides and imides), for examples, maleic anhydride and N-phenyl-maleimide.

Preferred monomer B.1.1.1 is selected from at least one of the group consisting of monomeric styrene, α-methylstyrene and methyl methacrylate, and the preferred monomer B.1.1.2 is selected from at least one of the group consisting of monomeric acrylonitrile, maleic anhydride and methyl methacrylate. Particularly preferred monomers are B.1.1.1 styrene and B.1.1.2 acrylonitrile.

Grafting base B.1.2 suitable for graft polymer B.1 is, for example, diene rubbers, EP(D)M rubbers (i.e., those based on ethylene/propylene and optionally diene), acrylate rubbers, polyurethane rubbers, silicone rubbers, chloroprene rubbers and ethylene/vinyl acetate rubbers, and silicone/acrylate composite rubbers.

The preferred grafting base B.1.2 is, for example, diene rubbers based on butadiene and isoprene, or mixtures of diene rubbers or copolymers of diene rubbers or mixtures of diene rubbers and other copolymerizable monomers (for example, according to B.1.1.1 and B.1.1.2).

Particularly preferred pure polybutadiene rubber is used as the grafting base B.1.2.

Particularly preferred polymer B.1 is, for example, acrylonitrile-butadiene-styrene terpolymers (ABS), methyl methacrylate-butadiene-styrene terpolymers (MBS), methyl acrylate-butadiene-styrene terpolymers, as is described in, for examples, DE-OS2035390 (=US-PS3644574) or in DE-OS2248242 (= GB-PS1409275) or in Ullmanns, Enzyklopädie der Technischen Chemie, Vol. 19(1980), pages 280 and later.

Said graft copolymer B.1 is prepared by free radical polymerization, for example, by emulsion polymerization, suspension polymerization, solution polymerization or bulk polymerization, preferably by emulsion polymerization or bulk polymerization, and particularly preferably by emulsion polymerization.

The grafting base B.1.2 has a gel content of at least 30 wt.%, preferably at least 40 wt.%, in particular at least 60 wt.%, respectively based on B.1.2 and measured as an insoluble part in toluene.

The gel content of the grafting base B.1.2 is determined at 25 °C in suitable solvents as an insoluble part in those solvents (M. Hoffmann, H. Krömer, R. Kuhn, Polymeranalytik I und II, GeorgThieme-Verlag, Stuttgart1977).

Particularly suitable graft rubbers are also ABS polymers prepared by the oxidative reduction initiation of the initiator system of an organic hydroperoxide and an ascorbic acid according to US-P4937285.

Since it is known that it is not necessary to entirely graft the grafting monomer onto the grafting base during the grafting reaction, the graft polymer B.1 according to the present invention should also be understood as the products prepared by (co)polymerization of the grafting monomer in the presence of said graft monomer, and obtained in the post-processing process. Such products may therefore also contain free (co)polymers of the grafting monomers, i.e., (co)polymers that are not chemically bond to the rubber.

A suitable acrylate rubber according to B.1.2 is preferably a polymer of an alkyl acrylate, optionally containing at most 40 wt.% of other polymerizable ethylenically unsaturated monomer based on B.1.2. Preferred polymerizable acrylate includes C1 to C8 alkyl esters such as methyl ester, ethyl ester, butyl ester, n-octyl ester and 2-ethylhexyl esters; haloalkyl esters, preferably halo-C1-C8 alkyl esters such as chloroethyl acrylate, and mixtures of these monomers.

For crosslinking, monomers having more than one polymerizable double bonds may be copolymerized. Preferred examples of the crosslinking monomers is esters of unsaturated monocarboxylic acids having 3 to 8 carbon atoms and unsaturated monohydric alcohols having 3 to 12 carbon atoms or a saturated polyol having 2 to 4 OH groups and 2 to 20 carbon atoms, such as ethylene glycol dimethacrylate and allyl methacrylate; polyunsaturated heterocyclic compounds such as trivinyl and triallyl cyanurate; polyfunctional vinyl compounds such as di- and trivinylbenzene; but may also be triallyl phosphate and diallyl phthalate. Preferred cross-linking monomers are allyl methacrylate, ethyleneglycol dimethacrylate, diallyl phthalate and heterocyclic compounds containing at least 3 ethylenically unsaturated groups. Particularly preferred crosslinking monomers are cyclic monomers: triallyl cyanurate, triallyl isocyanurate, triacrylhexahydro-s-triazine, triallylbenzene. The amount of the crosslinking monomers is preferably from 0.02 to 5 wt.%, particularly 0.05 to 2 wt.%, based on the grafting basis B.1.2. In case of a cyclic crosslinking monomer having at least 3 ethylenically unsaturated groups, it is advantageous to limit the amount to less than 1 wt.% of the grafting base B.1.2.

In addition to acrylate, preferred "other" polymerizable ethylenically unsaturated monomers that can be optionally used for the preparation of grafting base B.1.2 can be, for examples, acrylonitrile, styrene, α-methylstyrene, acrylamide, vinyl-C1-C6-alkyl ether, methyl methacrylate and butadiene. The preferred acrylic ester rubber as the grafting base B.1.2 is an emulsion polymer having a gel content of at least 60 wt.%. Examples of such B.1 include, but are not limited to, methyl methacrylate grafted acrylate rubbers including Paraloid^{™} EXL2311, EXL2313, EXL2315, EXL2300, EXL2390 from Dow Chemical and Durastrength^{™} 410, 440 and 480 from Arkema.

Other suitable grafting bases according to B.1.2 are silicone rubbers having grafting active sites, as described in DE-OS3704657, DE-OS3704655, DE-OS 3631540 and DE-OS 3631539. Examples of such B.1 include, but are not limited to, silicone-acrylate rubbers such as Metablen^{™} SX-006, Metablen^{™} SRK200, Metablen^{™} S-2001, Metablen^{™} S-2200 and Metablen^{™} S-2030 from Mitsubishi Rayon Co. Ltd.

### Component C

Functional acrylic polymers typically contain three moieties E/X/Y , where the moiety E is preferably about 45-89wt.%, more preferably 55-75wt.%, the moiety X is preferably about 10-40wt.%, more preferably 15-35wt.%, the moiety Y is about preferably 1-15wt.%, more preferably 2-15wt.%, based on the weight of the compatible ethylene-acrylic acid copolymer as 100 wt.%. E is an ethylene polymer, the moiety X is an α,β-ethylenically unsaturated monomer derived from at least one of the following substances: alkyl acrylate, alkyl methacrylate, alkyl vinyl ether, or mixtures thereof, wherein the alkyl group contains from 1 to 12 carbon atoms, such as vinyl acetate, methyl acrylate, butyl acrylate, and methyl vinyl ether. For example, the moiety X may be partially derived from at least one of the following: alkyl acrylate, alkyl methacrylate, alkyl vinyl ether, carbon monoxide, sulfur monoxide, or mixtures thereof. More specifically, the portion which represents 0-35 wt.% of the moiety X is derived from at least one of the following: alkyl acrylate, methyl methacrylate or mixtures thereof, wherein the alkyl group contains from 1 to 8 carbon atoms. the moiety Y is an a,p-ethylenically unsaturated monomer containing a reactive group, for example, epoxide, cis-butenedioic anhydride, isocyanate, or oxazoline to form a covalent bond with the first polymeric component. In a preferred embodiment, the moiety Y is selected from the group consisting of epoxy methacrylate, epoxy acrylate, cis-butenedioic anhydride, and isocyanatoethyl methacrylate. It is generally preferred to modify the functional acrylic polymer with an epoxy group.

The functional acrylic polymer typically comprises a plurality of repeating units, i.e., obtained by polymerizing acrylate monomers of formula (IV): 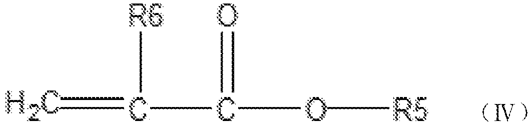 wherein R5 represents a hydrogen atom or an alkyl group having about 1 to 8 carbon atoms or a silane having an epoxy group or having a functional group; R6 represents a hydrogen atom or an alkyl group having about 1 to 8 carbon atoms. Some representative monomers which are frequently used include methyl methacrylate, butyl acrylate and cyclodimethylsiloxane. In most cases, R5 represents an alkyl group having from 1 to 4 carbon atoms. The epoxy group-containing moiety is usually as represented by the formula (V) 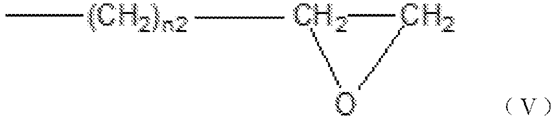 wherein n2 is an integer from 1 to 6, and in most cases, n2 is 1.

In a preferred embodiment of the present invention, component C) is selected from the group consisting of impact-resistant modifiers of glycidyl esters having the structure of formula (VI), 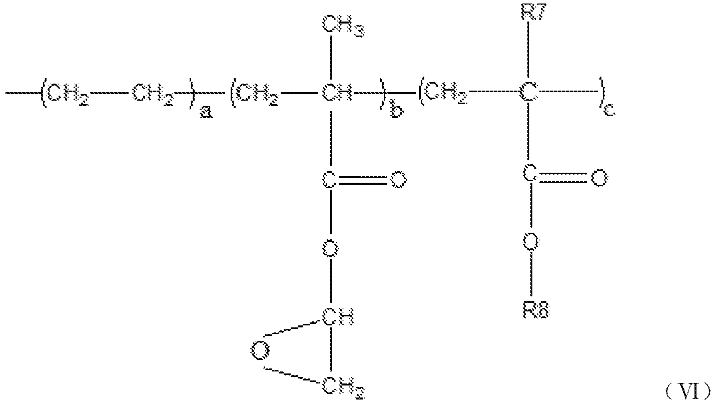 wherein,
R7 is H or methyl,
R8 is alkyl or aryl, preferably (C1-C4) alkyl or (C6-C20) aryl, particularly preferably methyl, ethyl, and butyl,
a + b + c = 100, a, b and c are selected in a way, that the above mentioned wt.% fractions of E, X and Y are fulfilled.

Preferably, the functional acrylic polymer is a terpolymer of ethylene, methyl acrylate, and glycidyl methacrylate. Such ternary polymer usually has a melting point within the range of 55 °C to 70 °C, which contains about 45 wt.% to 89 wt.% of ethylene, about 10 wt.% to 40 wt.% of methyl acrylate, and 1 wt.% to 15 wt.% of glycidyl methacrylate. For a functional acrylic polymer, it is more common to contain about 60 wt.% to 74 wt.% of ethylene, about 20 wt.% to 30 wt.% of methyl acrylate, and 6 wt.% to 10 wt.% of glycidyl methacrylate.

Examples of functional acrylic polymers include, but are not limited to, Lotader^{™} AX 8900 available from Arkema, Elvaloy^{™} PTW and Elvaloy^{™} 4170 available from Dupont.

In the preferred embodiment of the present invention, the content ratio of component C to component B is from 1:9 to 9:1, preferably from 1:6 to 6:1, and most preferably from 1:3 to 3:1. Articles prepared as such not only have a good impact-resistant property and flame retardant property, but also have a further improved apparent property.

### Component D

The polycarbonate composition of the present invention further comprise a flame retardant component D, such as an organic halogenated compound or a phosphorus-containing flame retardant, added as component D.

In the composition according to the present invention, it is preferable to use a phosphorus-containing flame retardant.

In the context of the present invention, the phosphorus-containing flame retardant is preferably selected from the group consisting of monomers and oligomeric phosphates and phosphonates, phosphonatamines and phosphazenes, and may also be the mixtures selected from one or more components of such type as a flame retardant. Other halogen-free phosphorus compounds that are not specifically mentioned herein may be used alone or in any combination with other halogen-free phosphorus compounds.

Preferred monomers and oligomeric phosphates and phosphonates are phosphorus compounds of general formula (VII) 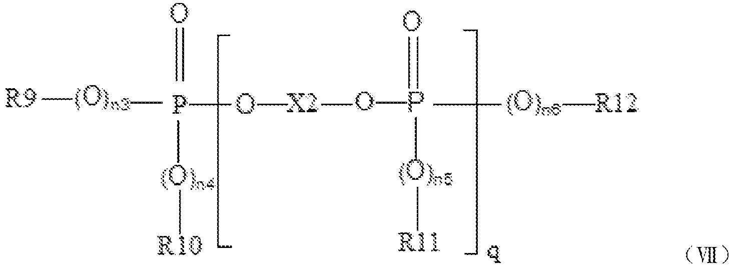 wherein
R9, R10, R11 and R12 each independently represents an optionally halogenated C1-C8 alkyl in each case, C5-C6 cycloalkyl, C6-C20 aryl or C7-C12 aralkyl optionally substituted with alkyl (preferably C1-C4 alkyl) and/or halogen (preferably chlorine, bromine) in each case; n3, n4, n5, n6 each independently represents 0 or 1; q represents 0-30, and
X2 represents a mono- or polynuclear aryl having 6 to 30 carbon atoms, or a linear or branched aliphatic group having 2 to 30 carbon atoms, which may be OH-substituted and may have up to 8 ether bonds.

Preferably, R9, R10, R11 and R12 each independently represent C1-C4 alkyl, phenyl, naphthyl or phenyl-C1-C4 alkyl. The aryl R9, R10, R11 and R12 may be further substituted with halogen and/or alkyl, preferably chlorine, bromine and/or C1-C4 alkyl. Particularly preferred aryls are tolyl, phenyl, xylyl, propylphenyl or butylphenyl and their corresponding brominated and chlorinated derivatives.

X2 in the formula (VII) preferably represents a mono- or polynuclear aryl having 6 to 30 carbon atoms, preferably a diphenol derived from the formula (I).

n3, n4, n5, n6 may each independently be 0 or 1 in formula (VII), and n3, n4, n5, n6 is preferably 1.

q represents a value from 0 to 30. If using a mixture of various components of the formula (VII), a mixture having a number average value q of preferably from 0.3 to 10, particularly preferably from 0.5 to 10, in particular from 1.05 to 1.4, may be used.

X2 particularly preferably represents 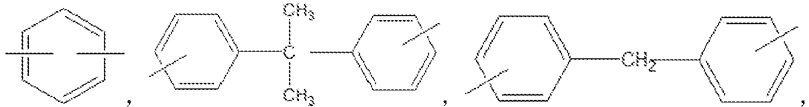 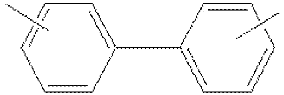 or its chlorinated or brominated derivatives, and in particular, X2 is derived from resorcinol, hydroquinone, bisphenol A or diphenylphenol. X2 is particularly preferably derived from bisphenol A.

The use of the oligomeric phosphate of formula (VII) derived from bisphenol A is particularly advantageous because the compositions provided by the phosphorus compounds have particularly high stress cracking resistance and hydrolytic resistance as well as particularly low tendency to form precipation during the injection molding process. In addition, using these flame retardants can obtain particularly high thermal deformation stability.

Monophosphate (q = 0), oligomeric phosphate (q = 1-30) or a mixture of mono- and oligomeric phosphates can be used as component D according to the present invention.

The monophosphorus compounds of formula (VII) particularly include: tributyl phosphate, tris (2-chloroethyl) phosphate, tris (2,3-dibromopropyl) phosphate, triphenyl phosphate, tritolyl phosphate, diphenyltolyl phosphate, diphenyloctyl phosphate, diphenyl-2-ethyltolyl phosphate, tris (isopropylphenyl) phosphate, halogen-substituted aryl phosphate, dimethyl methylphosphonate, diphenyl methylphosphonate, diethyl phenylphosphonate, triphenylphosphine oxide or trimethylphenyl phosphine oxide.

The phosphorus compounds according to component D of formula (VII) are known (see, e.g., EP-A363608, EP-A 640655) or can be prepared in a similar manner by known methods (e.g. Houben-Weyl, Methoden der organischen Chemie, vol. 12/1, p. 43; Beilstein, vol. 6, p. 177).

The composition (molecular weight distribution) of the phosphate mixture can be measured by suitable methods (Gas Chromatography (GC), High Pressure Liquid Chromatography (HPLC) or Gel-Permeation Chromatography (GPC)), and the average q value can be determined according to the average value of q calculated from which.

Phosphonatamine is preferably a compound of formula (VIII)

A-y-NBly (VIII)

wherein A represents a group of formula (VIIIa) or formula (VIIIb) 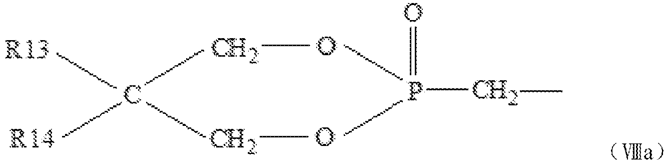 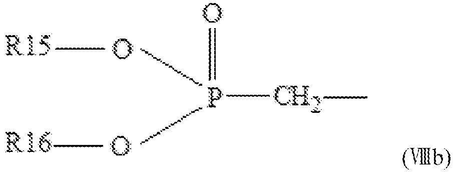
R13 and R14 each independently represent an unsubstituted or substituted C1-C10 alkyl or an unsubstituted or substituted C6-C10 aryl,
R15 and R16 each independently represent an unsubstituted or substituted C1-C10 alkyl or an unsubstituted or substituted C6-C10 aryl, or
R15 and R16 together represent an unsubstituted or substituted C3-C10 alkylene,
Y represents the value of 0, 1 or 2, and
B1 independently represents hydrogen, optionally halogenated C2-C8 alkyl, unsubstituted or substituted C6-C10 aryl.

B1 preferably independently represents hydrogen, or ethyl, n- or isopropyl which may be substituted by halogen, or an unsubstituted or C1-C4 alkyl- and/or halogen-substituted C6-C10 aryl, in particular phenyl or naphthyl.

The alkyls in R13, R14, R15 and R16 independently represent methyl, ethyl, n-propyl, isopropyl, n-, iso-, sec- or t-butyl, amyl or hexyl.

The substituted alkyls in R13, R14, R15 and R16 independently represent, preferably, halogen-substituted C1-C10 alkyl, in particular mono- or di-substituted methyl, ethyl, n-propyl, isopropyl, n-, iso-, sec- or t-butyl, amyl or hexyl.

The C6-C10 aryls in R13, R14, R15 and R16 independently represent, preferably, phenyl, naphthyl or binaphthyl which may be substituted by halogen (usually mono-, di- or tri-substituted), in particular o-phenyl, o-naphthyl, o-binaphthyl.

R15, R16 and oxygen atoms and phosphorus atoms that directly connect with them can together form a ring structure.

The compounds which are mentioned as the examples and are preferred are: 5,5,5',5',5",5"-hexamethyltris(1,3,2-dioxaphosphorinanemethane)amimo-2,2',2"-trioxides of formula (VIIIa-1), 1,3,2-dioxaphosphorinane dimethylamine, N-butyl-N-[(5,5-dimethyl-1,3,2-dioxaphosphorinan-2-yl)methyl]-5,5-dimethyl-P,2-dioxide; 1,3,2-dioxaphosphorinane-2-methylamine, N-[(5,5-dimethyl-1,3,2-dioxaphosphorinan-2-yl)methyl]-5,5-dimethyl-N-phenyl-P,2-dioxid e, 1,3,2-dioxaphosphoi-inane-2-methylamine N,N-dibutyl-5,5-dimethyl-2-oxide, 1,3,2-dioxaphosphorinane-2-methylimine, N-[(5,5-dimethyl-1,3,2-dioxaphosphorinan-2-yl)methyl]-N-ethy1-5,5-dimethyl-P,2-dioxide, 1,3,2-dioxaphosphorinane-2-methylamine, N-butyl-N-[(5,5-dichloromethyl-1,3,2-dioxaphosphorinan-2-yl)methyl]-5,5-dichloromethyl-P,2-dioxide, 1,3,2-dioxaphosphorinane-2-methylamine, N-[(5,5-dichloromethyl-1,3,2-dioxaphosphorinan-2-yl)methyl]-5,5-dichloromethyl-N-pheny 1-P,2-dioxide; 1,3,2-dioxaphosphorinane-2-methylamine, N,N-bis (4-chlorobutyl)-5,5-dimethyl-2-oxide; 1,3,2-dioxaphosphorinane-2-methylimine, N-[(5,5-dimethyl-1,3,2-dioxaphosphorinan-2-yl)methane]-N-(2-chloroethyl)-5,5-bis(chloro methyl)-P,2-dioxide.

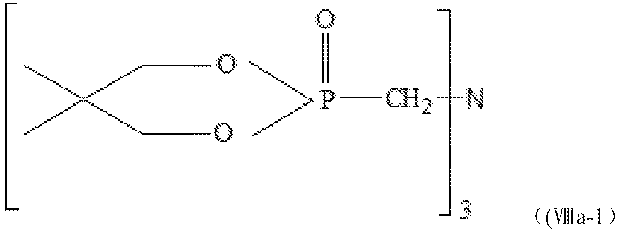

A further preferred compound is: a compound of formula (VIIIa-2) or (VIIIb-1) 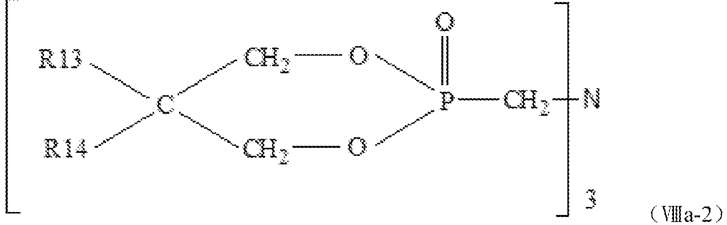 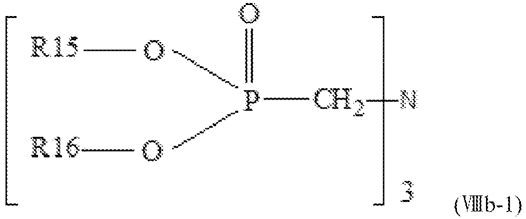 wherein
R13, R14, R15 and R16 have the above meanings.

Compounds of formulas (VIIIa-1) and (VIIIa-2) is particularly preferred. The preparation of the phosphonate amine is described, for example, in US-PS 5844028.

Phosphazene is a compound of the formula (IXa) and (IXb) 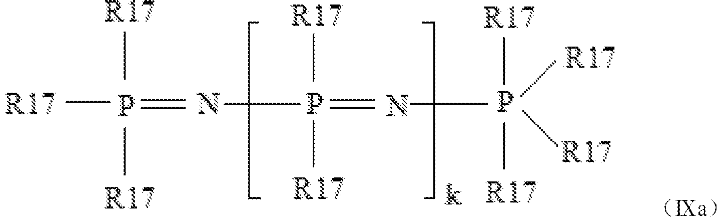 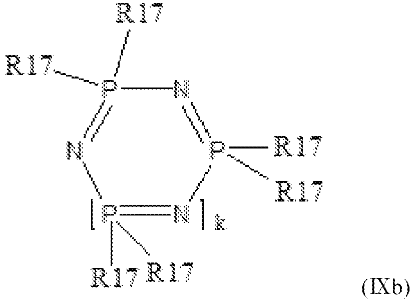 wherein
R17 is the same or different in each case and represents amino, and optionally halogenated in each case, preferably fluorine-halogenated C1-C8 alkyl or C1-C8 alkoxy, C5-C6 cycloalkyl, C6-C20 aryl (preferably phenyl or naphthyl), C6-C20 aryloxy (preferably phenoxy or naphthyloxy), or C7-C12 aralkyl (preferably phenyl-C1-C4 alkyl) optionally substituted with an alkyl (preferably C1-C4 alkyl) and/or halogen (preferably chlorine and/or bromine) in each case
k represents a number of 0 or from 1 to 15, preferably a number from 1 to 10.

Examples that may be mentioned are propoxyphosphazene, phenoxyphosphazene, methylphenoxyphosphazene, aminophosphazene and fluoroalkylphosphazene, preferably phenoxyphosphazene.

These phosphazenes can be used either alone or as a mixture. Group R17 may usually be the same, or two or more groups in the formulae (IXa) and (IXb) may be different. Phosphazenes and the preparations thereof are described in, for example, EP-A728811, DE-A1961668 and WO97/40092.

These flame retardants may be used alone or in any admixture with each other or with a mixture of other flame retardants.

### Component E

The compositions of the present invention further comprise kaolin. In a preferred embodiment of the present invention, kaolin may be subject to surface treatment, for example, by an adhesion promoter or an adhesion promoter system, which is commonly used in the art. Examples of which include an adhesion promoter system based on silane, such as the silane coupling agent KH 550 available from Dow Corning.

The average particle sizes of kaolin are 0.1-100µm, preferably 0.1-50µm, more preferably 0.1-25µm. The average particle size (d₅₀ value) is determined by the Malvern laser diffraction test method.

Most preferred average particle size (d₅₀ value) of kaolin is 0.1 to 2 µm.

### Component F

The polycarbonate compositions of the present invention may additionally further comprise conventional additives for polymers (component F) including, but not limited to, flame retardant synergists, anti-dripping agents (such as compounds of the types of fluorinated polyolefins, silicone and aramid fibers), lubricants and mold releasing agents (e.g., pentaerythritol tetrastearate), nucleating agents, antistatic agents, stabilizers, and dyes and pigments, and the types and contents thereof may be selected by a person skilled in the art according to the actual requirements.

In the following embodiments 1-25 of the invention are described.
1. A polycarbonate composition, comprising:
   A) a polycarbonate, wherein said polycarbonate is selected from aromatic polycarbonate, polyester polycarbonate or combinations thereof, and the content of polycarbonate is 40-95wt.%, based on the total weight of said polycarbonate composition as 100 wt.%;
   B) an impact-resistant modifier with core-shell structure, wherein the content of said impact modifier with core-shell structure is 1-15wt.%, based on the total weight of said polycarbonate composition as 100 wt.%;
   C) a functional acrylic polymer containing three moieties E/X/Y, wherein E is ethylene, X is an α,β-ethylenically unsaturated monomer derived from at least one of the substances selected from the group consisting of alkyl acrylate, alkyl methacrylate, alkyl vinyl ether, , and Y is an α,β-ethylenically unsaturated monomer containing a reactive group, and the content of said functional acrylic polymer is 1-15wt. %, based on the total weight of said polycarbonate composition as 100 wt. %;
   D) 1-20 wt.-% of at least one phosphorous based flame retardant or organic halogenated compounds;
   E) 0.1-15 wt.-% kaolin with an average particle size of 0.1-100 µm measured by the Malvern laser diffraction method,
      wherein, the total amount of compound B and compound C is 2-25wt.%, based on the total weight of said polycarbonate composition as 100 wt. %.
2. A polycarbonate composition according to embodiment 1, wherein said functional acrylic polymer is selected from random terpolymer of ethylene, acrylate, and glycidyl methacrylate.
3. A polycarbonate composition according to embodiment 1 or 2, comprising
   50-90wt.% of component A,
   1-10wt.% of component B,
   1-10wt.% of component C,
   wherein the total amount of component B and C is 2-15wt.%, based on the total weight of said polycarbonate composition as 100 wt.%,
   5-20 wt.% of component D.
4. A polycarbonate composition according to embodiment 3, comprising
   55-85wt.% of component A,
   1-8wt.% of component B,
   1-8wt.% of component C,
   wherein the total amount of component B and C is 4-15wt.%, based on the total weight of said polycarbonate composition as 100 wt.%,
   8-18 wt.% of component D.
5. Polycarbonate composition according to any of the preceding embodiments, further comprising kaolin as component E.
6. Polycarbonate composition according to embodiment 5, wherein the content of kaolin is 0.1 to 15 wt.%, based on the total weight of said polycarbonate composition as 100 wt. %.
7. Polycarbonate composition according to embodiment 6, wherein the content of kaolin is 0.5-10wt.%, based on the total weight of said polycarbonate composition as 100 wt. %.
8. Polycarbonate composition according to embodiment 6 or 7, wherein said kaolin has an average particle size of 0.1-100µm.
9. Polycarbonate composition according to embodiment 8, wherein said kaolin has an average particle size of 0.1-50µm.
10. Polycarbonate composition according to any of the preceding embodiments, wherein said impact-resistant modifier with core-shell structure is selected from impact-resistant modifiers based on acrylate rubber, diene rubber, silicone rubbers and silicone/acrylate composite rubbers or combinations thereof.
11. Polycarbonate composition according to embodiment 10, wherein said impact-resistant modifier with core-shell structure is selected from acrylonitrile-butadiene-styrene terpolymer, methyl methacrylate-butadiene-styrene terpolymer, methyl acrylate-butadiene-styrene terpolymer or combinations thereof.
12. Polycarbonate composition according any of the preceding embodiments 2-11, wherein the content of ethylene unit in random terpolymer of ethylene, acrylate, and glycidyl methacrylate is 45-89wt.%, the content of acrylate unit is 10-40wt.%, and the content of glycidyl methacrylate unit is 1-15wt.%, all based on the total weight of the random terpolymer as 100 wt. %.
13. Polycarbonate composition according any of the preceding embodiments further containing a phosphorous-containing flame retardant as component D).
14. Polycarbonate composition according to embodiment 13, wherein component D is 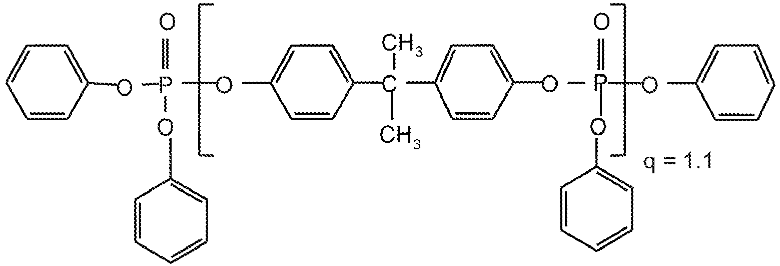
15. Polycarbonate composition according to embodiment 12, wherein said random terpolymer of ethylene, acrylate, glycidyl methacrylate has the structure of formula (VI): 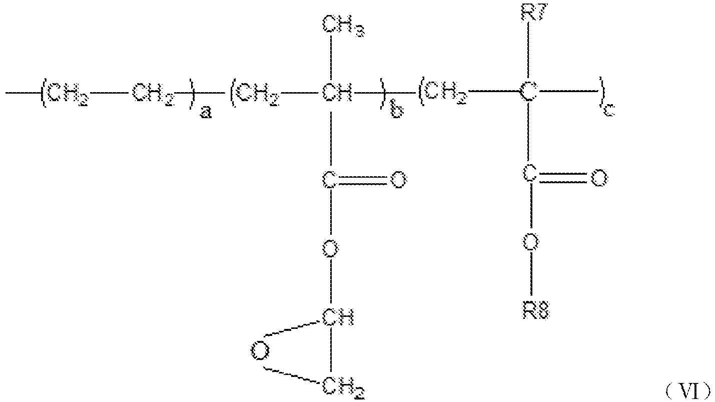 Wherein,
   R7 is H or methyl,
   R8 is alkyl or aryl, preferably (C1-C4) alkyl or (C6-C20) aryl, particularly preferably methyl, ethyl, butyl,
   a+b+c= 100.
16. Polycarbonate composition according to any of the preceding embodiments, wherein component C contains 60 wt.% to 74 wt.% of ethylene, 20 wt.% to 30 wt.% of methyl acrylate, and 6 wt.% to 10 wt.% of glycidyl methacrylate.
17. Polycarbonate composition according to any of the preceding embodiments, wherein content ratio of functional acrylic polymer to impact-resistant modifier with core-shell structure is 1:9-9:1.
18. Polycarbonate composition according to embodiment 18, wherein content ratio of functional acrylic polymer to impact-resistant modifier with core-shell structure is 1:3-3:1.
19. Polycarbonate composition according to any of the preceding embodiment 5-18, wherein the filler is kaolin with an average particle size of 0.1 to 25 µm.
20. Polycarbonate composition according to claim any of the preceding embodiments, further comprising one or more components selected from: anti-dripping agent, pigment, heat stabilizer, lubricant.
21. Use of the compositions according to any one of embodiments 1-20 in the production of injection-molded or thermoformed moulded articles.
22. Moulded articles obtainable from compositions according to any of embodiments 1-20.
23. A polycarbonate molded article prepared from polycarbonate composition according to any one of embodiments 1-20, wherein the notched impact strength of said molded article is at least 20KJ/m², as determined according to ISO180/A: 2000, the flame resistance reaches V0 at the thicknesses of 1.0mm and 0.75mm, as determined according to UL94:2006, and the Vicat softening temperature is at least 90°C, as determined according to ISO306:2013.
24. Molded article according to embodiment 22 or 23, wherein said molded article is the shell of electronic or electrical product.
25. Molded article according to embodiment 24, wherein said molded article is the shell of mobile phone, laptop, projector, copier, printer, or monitor equipment.

### Preparation of the molding materials and articles

The polycarbonate composition according to the present invention may be prepared by the following: mixing the specific components in a known manner, and subjecting the mixture in a conventional apparatus such as a twin-screw extruder or an inner kneader at a temperature of 200 °C to 300 °C to melt blending and extruding.

The mixing of individual components may be carried out in a known manner sequentially or simultaneously, and in particular at about 20 °C (room temperature) or at a higher temperature.

In a preferred embodiment, one or more of the components B, C, D, E are homogeneously mixed in a high speed mixer. The mixing speed and mixing time of the high speed mixer are determined by the number and weight of the components required to be mixed. The preferred mixing time of the high speed mixer is from 1 to 3 min, and the mixing speed of the high speed mixer is from 400 to 1000 rpm. Component A and the prepared blend are fed into a twin-screw extruder via a main feed. Component D can be added into the twin-screw extruder via a liquid pump, and all components can be melted, mixed and extruded at a temperature of 200 °C to 300 °C with the application of a vacuum. The preferred extrusion temperature is from 240 °C to 280 °C. The preferred extrusion rate is from 300 to 600 rpm. The preferred output is from 20 to 40 kg/h.

The polycarbonate compositions of the present invention can be used to produce all types of molded articles, which can be prepared by injection molding, extrusion and blow molding processes. Another processing form is to prepare the articles by deep-drawing the preformed sheet or film.

Examples of these molded articles include, but are not limited to, household appliances such as juicers, coffee machines, mixers; office machines such as and films, sectional material, and housing components of monitors, flat screens, laptops, printers, copiers; sheets, pipes, electric installation conduits, windows, doors and other sectional material used in the construction area (internal decoration and external application), and electrical and electronic components such as switches, plugs and sockets, as well as public vehicles, especially car body and internal components in the automotive field. In a preferred embodiment of the present invention, said molded articles are selected from the group consisting of housings of mobile phones or portable computers, projectors, copiers, printers, and the monitoring devices.

### Examples

The following Examples are intended to illustrate the embodiments of the present invention and are not intended to limit the present invention in any way.

The following are the various substances used in the present Examples:

The present application used the polycarbonate produced by our own company. Said polycarbonate has a weight-average molecular weight of 24,000 g/mol (M.2408) or 20,000 g/mol (OD2015) determined by gel permeation chromatography in methylene chloride with polycarbonate as standard, and is available from Covestro Polymers (China) Co., Ltd.; all of the impact-resistant modifiers and other adjuvants (antioxidants, lubricants) used in the present application are commercially available. Lotader^{™} AX8900 is an ethylene-methyl acrylate-glycidyl methacrylate Terpolymer (consisting of 67wt.% ethylene, 25wt.% methyl acrylate and 8 wt.% glycidyl methyacrylate) manufactured by Arkema Company; Novodur^{™} P60 is an acrylonitrile-butadiene-styrene terpolymer (manufactured by Ineos Styrolution Company) (having a gel content of 50% to 60%); BDP is a Bisphenol A-based oligophosphate with the trade name of ADK Stab FP-600 supplied by Adeka (Shanghai) Co., Ltd. China according to the following structure. 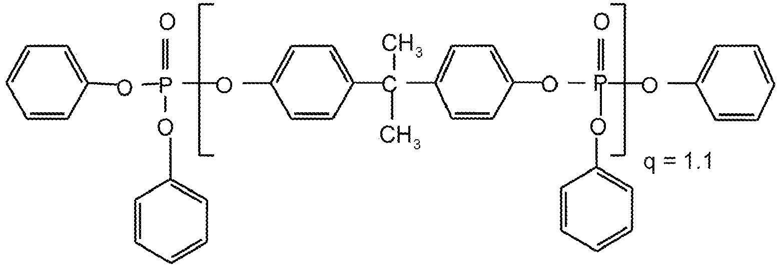 Polyfil^{™}HG90 is kaolin produced by KaMin Company, wherein Polyfil^{™} HG90 is an ultrafine washed kaolin with an average particle size of 0.4 µm (Malvern laser diffraction method); Ultra^{®} 5C is an ultrafine talc with an average particle size of 0.65 µm produced by Imifabi Company; Irganox^{™} B900 is an antioxidant produced by BASF Company; ADS5000 is a mixture of 50% polytetrafluoroethylene and 50 % styrene-acrylonitrile copolymer produced by IRPC Public Company Limited; pentaerythritol tetrastearate (PETS) is a lubricant produced by Emery Oleochemicals Company, and BP800 is a carbon black produced by Cabot.

Testing methods:
1. The Vicat softening temperature was examined according to ISO 306:2013. The examined sample size was 80mm × 10mm × 4mm, and the test conditions were 50N, 120K/h;
2. The ductility of the moulding compositions is assessed using the notched impact resistance value measured on these test specimens having a sample size of 80mm × 10mm × 4mm to ISO 180-1A (2006)at 23°C.
3. The vertical combustion performance was tested according to UL94:2006. The size of the tested sample was 127mm × 12.7mm × 0.75mm and 127mm × 12.7mm × 1mm;
4. The apparent properties of the texture surfaces were evaluated by using a texture molds. The injection molding device was Sumitomo all-electronic 180 t injection molding machine, and the screw diameter was 40mm. Different materials were used to prepare samples according to the injection molding process listed in Table 1, and the texture surface performances of different samples were then compared. The apparent properties of the texture surfaces are rated according to the following standard:
-: representing a poor apparent property of the texture surface, wherein the surface has a large number of flow marks and very obvious stress marks;
+: representing a regular apparent property of the texture surface, wherein the surface has flow marks and obvious stress marks;
++: representing a good apparent property of the texture surface, wherein the surface has a small amount of flow marks and stress marks;
+++: representing an excellent apparent property of the texture surface, wherein the surface has few flow marks and stress marks;
++++: representing an optimal apparent property of the texture surface, wherein the surface has hardly any flow marks and stress marks;

**Table 1: the formulation of the polycarbonate composition**

| | Comparative Example 1 | Example 2 | Comparative Example 3 |
|---|---|---|---|
| M.2408 | 66.2 | 65.2 | 65.2 |
| OD2015 | 7 | 7 | 7 |
| BDP | 17 | 16 | 16 |
| P60 | 6.4 | 6.4 | 4.8 |
| AX8900 | 1.6 | 1.6 | 3.2 |
| ADS5000 | 0.8 | 0.8 | 0.8 |
| IrganoxB900 | 0.1 | 0.1 | 0.1 |
| PETS | 0.4 | 0.4 | 0.4 |
| BP800 | 0.5 | 0.5 | 0.5 |
| Polyfil HG90 | | 2 | |
| Ultra 5C | | | 2 |

All blends in the following Examples were prepared in a Coperion ZSK 26MS twin screw extruder at a melting temperature of 240 °C to 265 °C, and the output of the blend was 25-35 kg/h. Components for ISO test were prepared at a melting temperature of about 280 °C.

**Table 2: the injection molding process for the samples of texture molds**

| Conditions | Melting temperature (°C) | Mold temperature (°C) | Hot runner temperature (°C) | Injection speed (mm/s) | Back pressure (MPa) | Screw speed (m/s) |
|---|---|---|---|---|---|---|
| 1 | 260 | 60 | 260 | 25 | 10 | 0.17 |
| 2 | | | | 60 | | |
| 3 | | | | 120 | | |
| 4 | | 80 | 260 | 25 | 10 | 0.17 |
| 5 | | | | 60 | | |
| 6 | | | | 120 | | |
| 7 | 280 | 60 | 270 | 25 | 10 | 0.17 |
| 8 | | | | 60 | | |
| 9 | | | | 120 | | |
| 10 | | 80 | 270 | 25 | 10 | 0.17 |
| 11 | | | | 60 | | |
| 12 | | | | 120 | | |

In each comparative example and inventive example, there were 12 samples prepared according to each condition as listed in above table 2 respectively. Testing results shown in table 3 are the average values of each corresponding property of samples in the comparative examples and the inventive example.

**Table 3: Test Results**

| Property | Test condition | unit | standard | Compara tive Example 1 | Example 2 | Compara tive Example 3 |
|---|---|---|---|---|---|---|
| vicat softening point | 50N; 120K/h | °C | ISO 306: 2013 | 93.5 | 94.8 | 92.2 |
| verti cal burning property | 0.75mm 2days | Class | UL94: 2006 | V0 | V0 | V0 |
| | 1.0mm 2days | Class | | V0 | V0 | V0 |
| apparent property of the texture surface | | | | + | ++++ | ++++ |
| notched impact strength | 23 °C, 4mm, 5.5J | KJ/m² | ISO180-1A : 2000 | 42 | 32 | 17 |

Comparative example 1 illustrates that when the polycarbonate composition comprises only the components B and C, the texture surface of the article prepared from it possesses not a very good apparent property. When the polycarbonate composition comprises in addition kaolin, the articles prepared show good apparent properties of the texture surfaces, impact strength and flame resistance (example 2). In addition, the Vicat temperature is increases. If instead of kaolin as filler talc is used, the surface appearance is also very good, but notched impact strength and Vicat temperature are impaired.

## Claims

1. A composition comprising
A) 40-95 wt.-% of at least one polymer selected from the group consisting of aromatic polycarbonate and aromatic polyestercarbonate,
B) 1-15 wt.-% of at least one impact-resistant modifier with core-shell structure,
C) 1-15 wt.-% of at least one functional acrylic polymer containing three moieties E/X/Y, wherein E is ethylene, X is an α,β-ethylenically unsaturated monomer derived from at least one of the substances selected from the group consisting of alkyl acrylate, alkyl methacrylate and alkyl vinyl ether, and Y is an a,p-ethylenically unsaturated monomer containing a reactive group,
D) 1-20 wt.-% of at least one phosphorous based flame retardant or organic halogenated compounds;
E) 0.1-15 wt.-% kaolin with an average particle size of 0.1-100 µm measured by the Malvern laser diffraction method,
wherein the total amount of compound B and compound C is 2-25wt.%.

2. A composition according to claim 1, wherein component A is an aromatic polycarbonate based on bisphenol A.

3. A composition according to claim 1 or 2, wherein said functional acrylic polymer is a random terpolymer of ethylene, acrylate, and glycidyl methacrylate.

4. A composition according to any of the preceding claims, comprising 50-90 wt.-% of component A,
1-10 wt.-% of component B,
1-10 wt.-% of component C,
5-20 wt.-% of component D,
0,5-10 wt.-% of component E,
wherein the total amount of component B and C is 2-15 wt.%.

5. A composition according to any of the preceding claims, wherein said impact-resistant modifier with core-shell structure is selected from acrylonitrile-butadiene-styrene terpolymer, methyl methacrylate-butadiene-styrene terpolymer, methyl acrylate-butadiene-styrene terpolymer or combinations thereof.

6. A composition according any of the preceding claims 3-4, wherein the content of ethylene units in the random terpolymer is 45-89wt.%, the content of acrylate units is 10-40 wt.%, and the content of glycidyl methacrylate units is 1-15wt.%, all based on the total weight of the random terpolymer as 100 wt. %.

7. A composition according to any of the preceding claims, wherein the content ratio of component C to component B is 1:9-9:1 by weight.

8. A composition according to any of the preceding claims, wherein component D is selected from the group consisting of monomers and oligomeric phosphates and phosphonates, phosphonatamines and phosphazenes.

9. A composition according to any of the preceding claims, wherein component D is

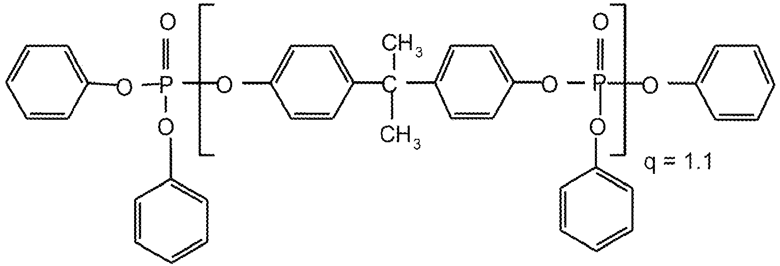

10. A composition according to claim any of the preceding claims, further comprising one or more components selected from: anti-dripping agent, pigment, heat stabilizer, lubricant.

11. A composition according to claim any of the preceding claims, wherein kaolin has an average particle size of 0.1 -2 µm measured by the Malvern laser diffraction method.

12. Use of a composition according to any one of claims 1-11 in the production of injection-molded or thermoformed moulded articles.

13. Moulded articles obtainable from a composition according to any of claims 1-11.

14. A polycarbonate molded article prepared from a composition according to any one of claims 1-11, wherein the notched impact strength of said molded article is at least 20KJ/m², as determined according to ISO180/A: 2000, the flame resistance reaches V0 at the thicknesses of 1.0 mm and 0.75 mm, as determined according to UL94:2006, and the Vicat softening temperature is at least 90°C, as determined according to ISO306:2013.

15. Molded article according to claim 13 or 14, wherein said molded article is the shell of electronic or electrical product.

## Patentansprüche

1. Zusammensetzung, umfassend
A) 40-95 Gew.-% mindestens eines Polymers aus der Gruppe bestehend aus aromatischem Polycarbonat und aromatischem Polyestercarbonat,
B) 1-15 Gew.-% mindestens eines Schlagzähmodifikators mit Kern-Schale-Struktur,
C) 1-15 Gew.-% mindestens eines funktionellen Acrylpolymers mit drei Einheiten E/X/Y, wobei E für Ethylen steht, X für ein α,β-ethylenisch ungesättigtes Monomer, das sich von mindestens einer der Substanzen aus der Gruppe bestehend aus Alkylacrylat, Alkylmethacrylat und Alkylvinylether ableitet, steht und Y für ein α,β-ethylenisch ungesättigtes Monomer mit einer reaktiven Gruppe steht,
D) 1-20 Gew.-% mindestens eines Flammschutzmittels auf Phosphor-Basis oder organischer halogenierter Verbindungen;
E) 0,1-15 Gew.-% Kaolin mit einer nach der Malvern-Laserbeugungsmethode gemessenen durchschnittlichen Teilchengröße von 0,1-100 µm,
wobei die Gesamtmenge von Verbindung B und Verbindung C 2-25 Gew.-% beträgt.

2. Zusammensetzung nach Anspruch 1, wobei es sich bei Komponente A um ein aromatisches Polycarbonat auf Basis von Bisphenol A handelt.

3. Zusammensetzung nach Anspruch 1 oder 2, wobei es sich bei dem funktionellen Acrylpolymer um ein statistisches Terpolymer von Ethylen, Acrylat und Glycidylmethacrylat handelt.

4. Zusammensetzung nach einem der vorhergehenden Ansprüche, umfassend
50-90 Gew.-% Komponente A,
1-10 Gew.-% Komponente B,
1-10 Gew.-% Komponente C,
5-20 Gew.-% Komponente D,
0,5-10 Gew.-% Komponente E,
wobei die Gesamtmenge von Komponente B und C 2-15 Gew.-% beträgt.

5. Zusammensetzung nach einem der vorhergehenden Ansprüche, wobei der Schlagzähmodifikator mit Kern-Schale-Struktur aus Acrylnitril-Butadien-Styrol-Terpolymer, Methylmethacrylat-Butadien-Styrol-Terpolymer, Methylacrylat-Butadien-Styrol-Terpolymer oder Kombinationen davon ausgewählt ist.

6. Zusammensetzung nach einem der vorhergehenden Ansprüche 3-4, wobei der Gehalt an Ethylen-Einheiten in dem statistischen Terpolymer 45-89 Gew.-% beträgt, der Gehalt an Acrylat-Einheiten 10-40 Gew.-% beträgt und der Gehalt an Glycidylmethacrylat-Einheiten 1-15 Gew.-% beträgt, jeweils bezogen auf das Gesamtgewicht des statistischen Terpolymers als 100 Gew.-%.

7. Zusammensetzung nach einem der vorhergehenden Ansprüche, wobei das Gehaltsverhältnis von Komponente C zu Komponente B 1:9-9:1 nach Gewicht beträgt.

8. Zusammensetzung nach einem der vorhergehenden Ansprüche, wobei Komponente D aus der Gruppe bestehend aus monomeren und oligomeren Phosphaten und Phosphonaten, Phosphonataminen und Phosphazenen ausgewählt ist.

9. Zusammensetzung nach einem der vorhergehenden Ansprüche, wobei es sich bei Komponente D um 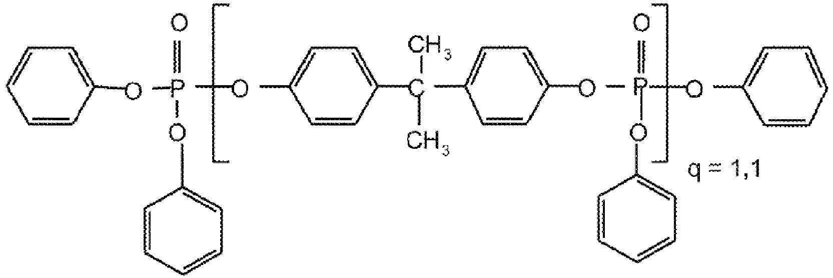 handelt.

10. Zusammensetzung nach Anspruch einem der vorhergehenden Ansprüche, ferner umfassend eine oder mehrere Komponenten, ausgewählt aus: Antidrippingmittel, Pigment, Wärmestabilisator, Schmiermittel.

11. Zusammensetzung nach Anspruch einem der vorhergehenden Ansprüche, wobei der Kaolin eine nach der Malvern-Laserbeugungsmethode gemessene durchschnittliche Teilchengröße von 0,1-2 µm aufweist.

12. Verwendung einer Zusammensetzung nach einem der Ansprüche 1-11 bei der Herstellung von spritzgegossenen oder thermogeformten Formkörpern.

13. Formkörper, erhältlich aus einer Zusammensetzung nach einem der Ansprüche 1-11.

14. Polycarbonat-Formkörper, hergestellt aus einer Zusammensetzung nach einem der Ansprüche 1-11, wobei die Kerbschlagzähigkeit des Formkörpers mindestens 20 kJ/m² gemäß Bestimmung nach ISO180/A:2000 beträgt, die Flammwidrigkeit bei den Dicken von 1,0 mm und 0,75 mm gemäß Bestimmung nach UL94:2006 V0 erreicht und die Vicat-Erweichungstemperatur gemäß Bestimmung nach ISO306:2013 mindestens 90°C beträgt.

15. Formkörper nach Anspruch 13 oder 14, wobei es sich bei dem Formkörper um das Gehäuse eines elektronischen oder elektrischen Produkts handelt.

## Revendications

1. Composition comprenant
A) 40 à 95 % en poids d'au moins un polymère choisi dans le groupe constitué par un polycarbonate aromatique et un polyestercarbonate aromatique,
B) 1 à 15 % en poids d'au moins un modificateur de résistance aux impacts doté d'une structure de type noyau-enveloppe,
C) 1 à 15 % en poids d'au moins un polymère acrylique fonctionnel contenant trois groupements E/X/Y, E étant éthylène, X étant un monomère éthyléniquement α,β-insaturé issu d'au moins l'une des substances choisies dans le groupe constitué par un acrylate d'alkyle, un méthacrylate d'alkyle et un éther d'alkyle et de vinyle, et Y étant un monomère éthyléniquement α,β-insaturé contenant un groupe réactif,
D) 1 à 20 % en poids d'au moins un retardateur de flamme à base phosphoreuse ou de composés halogénés organiques ;
E) 0,1 à 15 % en poids de kaolin doté d'une taille moyenne de particule de 0,1 à 100 µm mesurée par le procédé de diffraction laser Malvern,
la quantité totale de composé B et de composé C étant de 2 à 25 % en poids.

2. Composition selon la revendication 1, le composant A étant un polycarbonate aromatique basé sur le bisphénol A.

3. Composition selon la revendication 1 ou 2, ledit polymère acrylique fonctionnel étant un terpolymère statistique d'éthylène, d'acrylate, et de méthacrylate de glycidyle.

4. Composition selon l'une quelconque des revendications précédentes, comprenant 50 à 90 % en poids de composant A,
1 à 10 % en poids de composant B,
1 à 10 % en poids de composant C,
5 à 20 % en poids de composant D,
0,5 à 10 % en poids de composant E,
la quantité totale de composé B et C étant de 2 à 15 % en poids.

5. Composition selon l'une quelconque des revendications précédentes, ledit modificateur de résistance aux impacts doté d'une structure de type noyau-enveloppe étant choisi parmi un terpolymère acrylonitrile-butadiène-styrène, un terpolymère de méthacrylate de méthyle-butadiène-styrène, un terpolymère d'acrylate de méthyle-butadiène-styrène ou des combinaisons correspondantes.

6. Composition selon l'une quelconque des revendications précédentes 3 à 4, la teneur de motifs éthylène dans le terpolymère statistique étant de 45 à 89 % en poids, la teneur de motifs acrylate étant de 10 à 40 % en poids, et la teneur de motifs méthacrylate de glycidyle étant de 1 à 15 % en poids, tous basés sur le poids total du terpolymère statistique comme 100 % en poids.

7. Composition selon l'une quelconque des revendications précédentes, le rapport de teneur de composant C sur composant B étant de 1 : 9 à 9 : 1 en poids.

8. Composition selon l'une quelconque des revendications précédentes, le composant D étant choisi dans le groupe constitué par des monomères et des phosphates oligomériques et des phosphonates, des phosphonatamines et des phosphazènes.

9. Composition selon l'une quelconque des revendications précédentes, le composant D étant

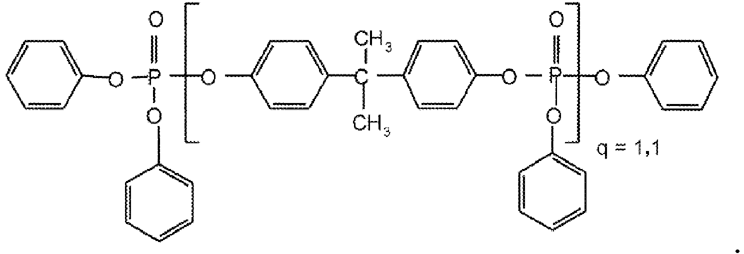

10. Composition selon la revendication l'une quelconque des revendications précédentes, comprenant en outre un ou plusieurs composants choisis parmi : un agent anti-égouttement, un pigment, un stabilisant thermique, un lubrifiant.

11. Composition selon la revendication l'une quelconque des revendications précédentes, le kaolin possédant une taille moyenne de particule de 0,1 à 2 µm mesurée par le procédé de diffraction laser Malvern.

12. Utilisation d'une composition selon l'une quelconque des revendications 1 à 11 dans la production d'articles moulés moulés par injection ou thermoformés.

13. Articles moulés pouvant être obtenus à partir d'une composition selon l'une quelconque des revendication 1 à 11.

14. Article moulé de polycarbonate préparé à partir d'une composition selon l'une quelconque des revendications 1 à 11, la résistance à l'essai d'impact entaillé dudit article moulé étant d'au moins 20 KJ/m², telle que déterminée selon la norme ISO180/A: 2000, la résistance au feu atteignant V0 aux épaisseurs de 1,0 mm et 0,75 mm, telle que déterminée selon la norme UL94:2006, et la température de ramollissement Vicat étant d'au moins 90 °C, telle que déterminée selon la norme ISO306:2013.

15. Article moulé selon la revendication 13 ou 14, ledit article moulé étant l'enveloppe d'un produit électronique ou électrique.
